# FASCICULE DE BREVET EUROPEEN

(11) **EP 3 052 781 B1**
(45) Date de publication et mention de la délivrance du brevet: **26.12.2018**
(21) Numéro de dépôt: 14793231.3
(22) Date de dépôt: 30.09.2014
(51) Int. Cl.: F02B 29/04, F02D 41/22, F02B 77/08

(54) **PROCÉDÉ DE DÉTECTION DE LA DÉFAILLANCE D'UN REFROIDISSEUR D'AIR SURALIMENTÉ ET DISPOSITIF DE MOTORISATION ASSOCIÉ**
VERFAHREN ZUR FEHLERDIAGNOSE EINES LADELUFTKÜHLERS UND ZUGEHÖRIGES KRAFTWERK
METHOD FOR DETECTING THE FAILURE OF A CHARGE AIR COOLER AND ASSOCIATED POWER PLANT

(30) Priorité: 01.10.2013 FR 1359498
(43) Date de publication de la demande: 10.08.2016
(73) Titulaire: Renault S.A.S., 92100 Boulogne-Billancourt (FR)
(72) Inventeur: AVONS, Vincent-Pierre, F-75014 Paris (FR); PAILLARD, Jerome, F-91660 Mereville (FR)
(86) Numéro de dépôt international: PCT/FR2014/052457
(87) Numéro de publication internationale: WO 2015/049451

(56) Documents cités:
- WO-A1-2013/073457
- FR-A1- 2 972 767
- JP-A- 2002 180 889
- JP-A- 2007 146 712
- JP-A- 2010 151 040

## Description

### DOMAINE TECHNIQUE DE L'INVENTION

L'invention concerne un procédé embarqué de détection de défaillance d'un refroidisseur d'air suralimenté dans un moteur à combustion interne suralimenté, notamment de véhicule automobile. Elle concerne également un dispositif de motorisation apte à la mise en oeuvre d'un tel procédé.

### ETAT DE LA TECHNIQUE

De nos jours, de nombreux moteurs à combustion interne sont suralimentés. Un dispositif de suralimentation d'un moteur peut par exemple comprendre un turbocompresseur, comportant d'une part un compresseur qui alimente le moteur en air à une pression supérieure à la pression atmosphérique, et d'autre part une turbine traversée par des gaz d'échappement du moteur. La puissance fournie à la turbine par la détente des gaz traversant la turbine est transmise, par l'intermédiaire d'un arbre, au compresseur qui comprime l'air aspiré de l'atmosphère extérieure, à une pression dite pression de suralimentation.

La suralimentation permet ainsi d'augmenter les performances d'un moteur en admettant, pour la combustion du carburant, un débit massique d'air plus élevé que dans un moteur atmosphérique de cylindrée équivalente.

En outre, le compresseur d'un tel dispositif de suralimentation est souvent associé à un refroidisseur d'air suralimenté, qui est implanté dans le circuit d'admission d'air du moteur entre le compresseur et un collecteur d'admission du moteur. Ce refroidisseur permet de refroidir l'air préalablement comprimé et échauffé par le compresseur, avant que cet air ne pénètre dans le moteur.

Un tel refroidisseur permet d'augmenter encore plus les capacités de remplissage en air du moteur en phase de forte suralimentation, via l'abaissement de la température d'air et l'augmentation de la masse volumique de l'air. Il sert donc notamment à améliorer les performances du moteur en fonctionnement à charge élevée, par exemple lors de fortes accélérations du véhicule.

Quand le refroidisseur manque d'efficacité, c'est-à-dire qu'il ne refroidit pas, ou qu'il refroidit insuffisamment l'air suralimenté, alors les performances du moteur, en particulier les performances maximales, sont amoindries. De plus, les émissions polluantes à l'échappement du moteur sont augmentées sur de nombreux points de fonctionnement du moteur parce-que le réglage du moteur, qui a été prévu pour un débit massique d'air admis et une proportion air / carburant prédéfinis et supérieurs à leurs valeurs réelles, est inadapté.

Il existe un besoin de surveillance et de détection de la défaillance d'un refroidisseur d'air suralimenté, notamment pour s'assurer que de telles émissions polluantes sont compatibles avec les normes légales, par exemple la norme « euro6 » en Europe.

On connaît de l'état de la technique plusieurs procédés qui visent à diagnostiquer le fonctionnement d'un refroidisseur d'air suralimenté d'un moteur à combustion interne, par exemple de véhicule automobile.

Par exemple, la publication FR-B1-2972767 divulgue un procédé de détection de la défaillance d'un refroidisseur d'air de suralimentation placé dans le circuit d'alimentation en air d'un moteur, ledit circuit comprenant en outre un filtre à air et un compresseur, ledit procédé étant réalisé en continu, par itérations successives, et qui comprend :
- Une étape de détermination de la température Tair de l'air entre le filtre et le compresseur, de la température Tapc entre le compresseur et le refroidisseur, et de la température de l'air Tsras entre ledit refroidisseur et le moteur ;
- Une étape de calcul du rapport Tapc - Tsras / Tapc - Tair qui est un paramètre représentatif de l'efficacité du refroidisseur ;
- Une étape de comparaison de ce paramètre avec une valeur d'efficacité seuil prédéterminée ; et,
- Une étape d'établissement d'un diagnostic de bon ou mauvais fonctionnement du refroidisseur, effectué à partir de cette comparaison.

Bien qu'utile, un tel procédé s'appuyant sur trois mesures de température peut apparaître assez fragile. La demanderesse a remarqué qu'un tel procédé manque de précision et de répétabilité, et peut conduire à des cas de faux diagnostic (refroidisseur bon jugé mauvais) ou de non diagnostic (refroidisseur mauvais jugé bon), selon les points de fonctionnement du moteur. Plus particulièrement, un tel procédé ne permet pas de juger de manière fiable l'efficacité d'un refroidisseur d'air suralimenté en dehors des plages de fonctionnement stabilisé du moteur, c'est-à-dire lors des phases de fonctionnement transitoire, par exemple lors de fortes accélérations, à charge élevée. JP 2007 146712 A et JP 2010 151040 A décrivent un procédé de détection de la défaillance d'un refroidisseur d'air de suralimentation.

### RESUME DE L'INVENTION

L'invention propose de remédier aux défauts de précision des procédés connus. Elle vise également à proposer un procédé de détection de défaillance d'un refroidisseur d'air suralimenté très simple à mettre en oeuvre, ne nécessitant de recourir qu'à des capteurs déjà présents pour le fonctionnement ordinaire du moteur.

Elle propose pour cela un procédé de détection de la défaillance d'un refroidisseur d'air suralimenté implanté dans un circuit d'alimentation d'air d'un moteur à combustion interne de véhicule automobile, ledit circuit comprenant un compresseur en amont du refroidisseur, ledit procédé étant réalisé en continu, par itérations successives, et comprenant une étape de détermination de la température d'air suralimenté refroidi entre le refroidisseur et le moteur, caractérisé en ce qu'il comprend en outre :
- Une étape de calcul du taux de variation temporelle de ladite température d'air suralimenté refroidi ;
- Une étape de comparaison dudit taux de variation avec au moins un premier seuil positif ; et,
- Une étape d'établissement de diagnostic de bon ou mauvais fonctionnement du refroidisseur effectué à partir de cette comparaison.

Elle propose également un dispositif de motorisation apte à la mise en oeuvre du procédé selon l'invention.

### BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :
- la figure 1 est une représentation schématique d'un dispositif de motorisation, comprenant un moteur à combustion interne, apte à la mise en oeuvre du procédé selon l'invention ;
- la figure 2 est une représentation schématique des étapes d'un procédé de détection de défaillance d'un refroidisseur d'air suralimenté selon un premier mode de réalisation de l'invention ; et,
- la figure 3 est une représentation schématique des étapes d'un procédé selon un autre mode de réalisation de l'invention.

### DESCRIPTION DETAILLEE DES FIGURES

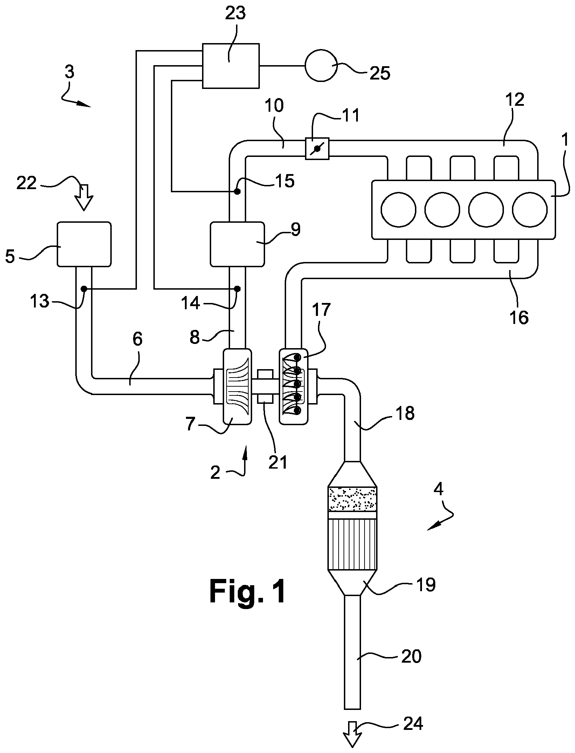

La figure 1 représente schématiquement un dispositif de motorisation apte à la mise en oeuvre de l'invention. Il comprend un moteur à combustion interne 1, qui peut être, de manière non limitative, un moteur à allumage commandé, monté par exemple sur un véhicule automobile (non-représenté), équipé d'un turbocompresseur 2, qui est ici du type à géométrie variable, et associé à un certain nombre de pièces composant le circuit d'admission 3 d'air du moteur 1 et le circuit d'échappement 4 des gaz brûlés du moteur 1.

Dans la suite de la description, les termes « amont » et « aval » qui situent une pièce d'un circuit par rapport à une autre pièce du même circuit font référence au sens de circulation de l'air dans le circuit d'admission 3 ou au sens de circulation des gaz brûlés dans le circuit d'échappement 4.

Le circuit d'admission 3 d'air comporte un filtre à air 5, un premier tuyau d'air 6, dit tuyau de liaison filtre-compresseur, qui relie le filtre à air 5 à un compresseur 7 du turbocompresseur 2. Un deuxième tuyau d'air 8, dit tuyau de liaison compresseur-refroidisseur, relie le compresseur 7 à un refroidisseur 9 d'air suralimenté. Le refroidisseur d'air 9 est par exemple ici un échangeur du type air/air. En variante non représentée, on peut aussi utiliser un échangeur du type air/eau.

La sortie du refroidisseur 9 est reliée à une extrémité d'un troisième tuyau d'air 10, dit tuyau de liaison turbocompresseur-papillon. L'autre extrémité de ce troisième tuyau d'air 10 est reliée à un volet d'admission d'air 11, ou boîtier-papillon 11. Ce boîtier-papillon 11 est monté à l'entrée d'un collecteur d'admission 12, ou répartiteur 12, du moteur 1.

Dans le cadre du procédé de détection de la défaillance du refroidisseur selon l'invention, le dispositif de motorisation peut comporter trois capteurs qui sont implantés dans le circuit d'admission d'air 3.

Un premier capteur de température 13, apte à mesurer la température d'air ambiant Tair, c'est-à-dire la température de l'air extérieur au véhicule, est ici implanté en aval du filtre à air 5 (dans le sens de circulation de l'air), sur le premier tuyau d'air 6, en amont du compresseur 7. En variante (non représentée), on pourrait aussi utiliser, par exemple, un capteur de température d'air suralimenté, c'est-à-dire un capteur implanté en aval du compresseur 7, pour mesurer une température Tair représentative de la température d'air ambiant Tair au démarrage du moteur, en mesurant par ailleurs la température du liquide de refroidissement du moteur pour s'assurer que celui-ci ne redémarre pas à chaud.

Un capteur de pression 14, permettant de mesurer la pression de suralimentation Psural, est implanté à un endroit du circuit d'admission d'air 3 situé en aval du compresseur 7, entre le compresseur 7 et le boîtier-papillon 11. Sur la figure 1, il est implanté sur le deuxième tuyau d'air 8, entre le compresseur 7 et le refroidisseur 9. Il peut aussi être implanté entre le refroidisseur 9 et le boîtier-papillon 11, sur le troisième tuyau d'air 10.

Un deuxième capteur de température 15 d'air, apte à mesurer la température d'air suralimenté refroidi Tsras est implanté en aval du refroidisseur 9, sur le troisième tuyau d'air 10.

Classiquement, le moteur 1 comporte un carter-cylindres délimitant une pluralité de cylindres (au nombre de quatre sur la figure 1), une culasse délimitant une pluralité de chambres de combustion associées à un conduit d'admission, à au moins une soupape d'admission, à des moyens d'injection de carburant, par exemple un injecteur d'essence, à au moins une soupape d'échappement et à un conduit d'échappement des gaz brûlés.

Le circuit d'échappement 4 des gaz brûlés du moteur 1 comprend un collecteur d'échappement 16 qui relie la sortie du moteur 1 à l'entrée d'une turbine 17 du turbocompresseur 2. La sortie de la turbine 17 est reliée à une extrémité d'un tuyau d'échappement 18, dont l'autre extrémité est reliée à un dispositif de traitement 19 des émissions polluantes des gaz d'échappement du moteur 1. A son extrémité libre, le circuit d'échappement 4 se termine par un pot d'échappement 20.

Le turbocompresseur 2, qui est ici du type à géométrie variable, c'est-à-dire avec des ailettes de turbine 17 à orientation variable dans le flux des gaz, comprend le compresseur 7, qui fait partie du circuit d'admission d'air 3 du moteur 1, et la turbine 17, qui fait partie du circuit d'échappement 4 du moteur 1. Le turbocompresseur 2 comprend en outre un arbre 21 auquel le compresseur 7 et la turbine 17 sont liés en rotation.

D'une manière connue en soi, le mode de fonctionnement du moteur 1 peut être le suivant : De l'air provenant de l'extérieur du véhicule à la pression atmosphérique, parcourt le circuit d'admission 3 du moteur 1 à partir de la flèche 22. Il est filtré dans le filtre à air 5, puis comprimé dans le compresseur 7 dont il ressort surchauffé. Le débit volumique d'air Qv,air est alors réglé par l'ouverture plus ou moins grande du boîtier-papillon. Puis l'air pénètre dans le répartiteur 12 du moteur 1, et de là, dans les chambres de combustion du moteur 1 où il brûle avec du carburant, par exemple de l'essence.

En fonction du régime N du moteur et d'une consigne de couple (ou : charge) C traduisant le besoin en couple moteur, lié notamment à l'enfoncement de la pédale d'accélération (non-représentée) du véhicule par le conducteur, un calculateur 23 du moteur détermine d'une part un débit massique d'air Qair, et d'autre part un débit massique de carburant Qcarb à injecter dans le moteur 1, qui peut être le plus souvent dans les proportions stoechiométriques, dans le cas d'un moteur 1 à allumage commandé.

Le débit massique d'air Qair est traduit en une consigne de pression de collecteur d'admission Pcoll, c'est-à-dire une consigne de pression d'air dans le répartiteur 12, en aval du boîtier-papillon 11.

Théoriquement, un débit massique d'air Qair donné (mesuré en kg/s) peut être obtenu par différents choix de consigne d'ouverture α de boîtier-papillon 11 et de consigne de position des ailettes Uvgt de la turbine 17 : La première consigne permet de régler la section de passage de l'air admis dans le circuit d'admission, c'est-à-dire de jouer sur son débit volumique Qv,air (mesuré en m³/s).

La seconde consigne permet de régler l'inclinaison des ailettes dans le flux des gaz et ainsi d'opposer une résistance plus ou moins grande aux gaz d'échappement du moteur 1 qui traversent la turbine 17. On module ainsi la puissance qui est prélevée aux gaz d'échappement par la turbine 17 et qui est transmise au compresseur 7 via l'axe 21 pour la compression de l'air, ce qui permet d'ajuster la pression de suralimentation Psural, c'est-à-dire de jouer sur la densité de l'air admis (mesurée en kg/m³).

Pour simplifier le pilotage du moteur 1, la régulation de la pression de l'air dans le collecteur d'admission Pcoll est réalisée en n'agissant que sur un seul actionneur à la fois parmi le boîtier-papillon 11 et la position Uvgt des ailettes de la turbine 17. En d'autres termes, on utilise deux modes distincts de régulation de la pression de collecteur d'admission Pcoll.

Pour des besoins en couple C du moteur 1 relativement faibles, c'est-à-dire pour des valeurs de pression de collecteur d'admission Pcoll peu élevées, inférieures à un seuil de pression qui est une fonction du régime N, le moteur est dans un mode de régulation de la suralimentation dit « suralimentation naturelle » qui correspond aux deux conditions suivantes :
- Les ailettes de la turbine 17 sont réglées avec une inclinaison telle qu'elles opposent la résistance la plus forte aux gaz d'échappement traversants, c'est-à-dire que les gaz d'échappement sortant du moteur 1 fournissent à la turbine 17 une énergie de détente maximale pour la compression du débit d'air dans le compresseur 7.
- La pression d'air dans le collecteur d'admission Pcoll est régulée en boucle ouverte sur une consigne de pression par le calculateur 23, en agissant sur la valeur d'ouverture α du boîtier-papillon 11. La pression de suralimentation Psural n'est pas régulée directement, mais elle est la résultante de l'ouverture α du boîtier-papillon 11 et de la pression d'air dans le collecteur d'admission Pcoll.

Pour des besoins en couple C du moteur 1 relativement élevés, c'est-à-dire pour des valeurs de pression de collecteur d'admission Pcoll importantes, supérieures à un seuil de pression dépendant du régime N, le moteur est dans un mode de régulation de la suralimentation dit « régulation en boucle fermée ».

Le boîtier-papillon 11 est complètement ouvert, c'est-à-dire que la section de passage et le débit volumique de l'air Qv,air admis sont maximaux. La pression de l'air dans le collecteur d'admission Pcoll se confond avec la pression de suralimentation Psural. La pression de l'air dans le collecteur d'admission Pcoll est régulée en boucle fermée sur une consigne de pression par le calculateur 23, en agissant sur la position Uvgt des ailettes de la turbine 17.

Quel que soit le mode de régulation utilisé, les gaz de combustion sortant de la turbine 17 sont ensuite dépollués dans le dispositif de traitement 19, et ils sont enfin rejetés dans l'atmosphère extérieure via le pot d'échappement 20, selon la flèche 24.

On décrit maintenant deux modes de réalisation d'un procédé selon l'invention. Pour la mise en oeuvre d'un tel procédé, le calculateur 23 est relié au premier capteur 13 d'air ambiant Tair, au capteur de pression 14 de suralimentation Psural, et au deuxième capteur de température d'air suralimenté refroidi Tsras. Il est également relié à des moyens de détermination de la vitesse V du véhicule (par exemple un tachymètre, non représenté), et à un voyant 25 apparent sur le tableau de bord du véhicule, qui peut s'allumer pour avertir le conducteur du véhicule que le refroidisseur 9 est défaillant.

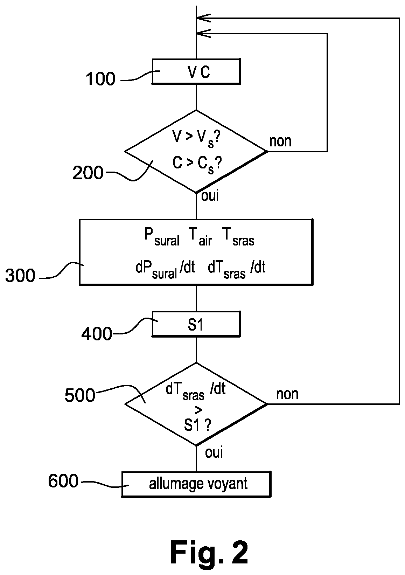

Sur la figure 2, on a représenté les étapes du procédé de diagnostic d'un moteur suralimenté 1 selon un premier mode de réalisation de l'invention.

Le principe du diagnostic réside dans une surveillance continue de la température d'air suralimenté refroidi Tsras, en aval du compresseur 7 et du refroidisseur 9, et dans le suivi de ses variations.

Plus précisément, un refroidisseur 9 en bon état de fonctionnement est caractérisé par le fait qu'il amortit bien les augmentations de température d'air comprimé qui peuvent se produire en aval du compresseur 7, par exemple, en cas de forte variation de la charge, notamment lors d'accélérations franches du véhicule.

Inversement, un refroidisseur 9 défaillant, par exemple un refroidisseur dont les ailettes sont colmatées, peut être assimilable à un simple conduit d'air. Alors, en cas de forte variation de charge, une variation de température rapide de la température en aval du compresseur 7, c'est-à-dire en amont du refroidisseur 9, se traduit par une variation de température aussi élevée en aval du refroidisseur 9.

Le procédé se déroule en continu par itérations successives avec un pas de temps dt. Il comporte une première étape 100 de détermination de la vitesse V du véhicule et du couple moteur (ou : charge) C.

Il comporte ensuite une deuxième étape de test 200, au cours de laquelle le calculateur 23 détermine si cette vitesse V et cette charge C sont dans des plages respectives permettant une détection fiable. Par exemple, on peut comparer la vitesse V à un seuil de vitesse minimum Vs et la charge à un seuil de charge minimum Cs de manière à ne déclencher le diagnostic proprement dit qu'au-dessus de ces seuils respectifs.

En effet, une défaillance ne peut être détectée que lorsque la vitesse V du véhicule est relativement élevée, en particulier pour un refroidisseur du type échangeur air /air tel que décrit dans le mode de réalisation de la figure 1, le débit d'air ambiant traversant l'échangeur étant un facteur de premier ordre de l'efficacité naturelle d'un tel échangeur. Une défaillance est aussi d'autant mieux détectée qu'elle permet de bien distinguer le comportement d'un refroidisseur 9 en bon état de celui d'un refroidisseur 9 défaillant, ce qui est le cas essentiellement à charge élevée, dans un mode de régulation de la suralimentation dit « régulation en boucle fermée » comme exposé plus haut.

Si le résultat du test est négatif, le procédé reprend à l'étape 100 après un pas de temps dt. Dans le cas contraire, il oriente vers une troisième étape 300 au cours de laquelle on détermine la pression de suralimentation Psural, la température d'air ambiant Tair, et la température d'air suralimenté refroidi Tsras.

Au cours de cette étape 300, on calcule également le taux de variation temporelle de la pression de suralimentation dPsural / dt. Pour cela, on peut retrancher à la valeur courante de la pression de suralimentation Psural, la valeur de la pression de suralimentation au pas de calcul précédent, et diviser le résultat par la valeur du pas de temps dt.

Au cours de cette même étape 300, on calcule encore le taux de variation temporelle de la température d'air suralimenté refroidi dTsras / dt. Ce calcul peut se faire mutatis mutandis de la même manière que celui de la variation temporelle de la pression de suralimentation dPsural / dt précédent.

Le procédé se poursuit par une quatrième étape 400 de détermination d'un premier seuil S1 de taux de variation temporelle positive de la température d'air suralimenté refroidi Tsras. Un tel seuil S1 dépend d'un ensemble de paramètres comprenant au moins, dans le cas d'un refroidisseur 9 qui est un échangeur du type air/air, la pression de suralimentation Psural, le taux de variation temporelle de la pression de suralimentation d Psural / dt, la température d'air ambiant Tair et la vitesse du véhicule déterminée à l'étape 100.

Les différentes valeurs de seuil peuvent être calibrées à l'avance sur véhicule puis stockées dans une mémoire du calculateur 23.

On notera que, dans un mode de réalisation non représenté de l'invention dans lequel le refroidisseur 9 est un échangeur de type air/eau, il n'est pas nécessaire de déterminer la température d'air ambiant à l'étape 300, et que le premier seuil S1 est déterminé à l'étape 400 en fonction d'un ensemble de paramètres qui comprend au moins trois paramètres seulement : la pression de suralimentation Psural, le taux de variation temporelle de la pression de suralimentation d Psural / dt, et la vitesse du véhicule déterminée à l'étape 100.

Le procédé se poursuit encore par une cinquième étape 500 de comparaison du taux de variation temporelle de l'air suralimenté refroidi dTsras / dt avec le premier seuil S1. Si ledit taux est inférieur au premier seuil positif S1, le refroidisseur est jugé en bon état et le procédé reprend à l'étape 100 après l'écoulement d'un pas de temps dt. En revanche, si il est supérieur au premier seuil positif S1, ce qui signifie que l'air en sortie du refroidisseur 9 subit des augmentations de température trop rapides par rapport à ce qui est attendu d'un refroidisseur en bon état, le procédé oriente vers une sixième étape de détection de défaillance, au cours de laquelle le voyant 25 s'allume au tableau de bord pour mettre en évidence ce diagnostic de défaillance.

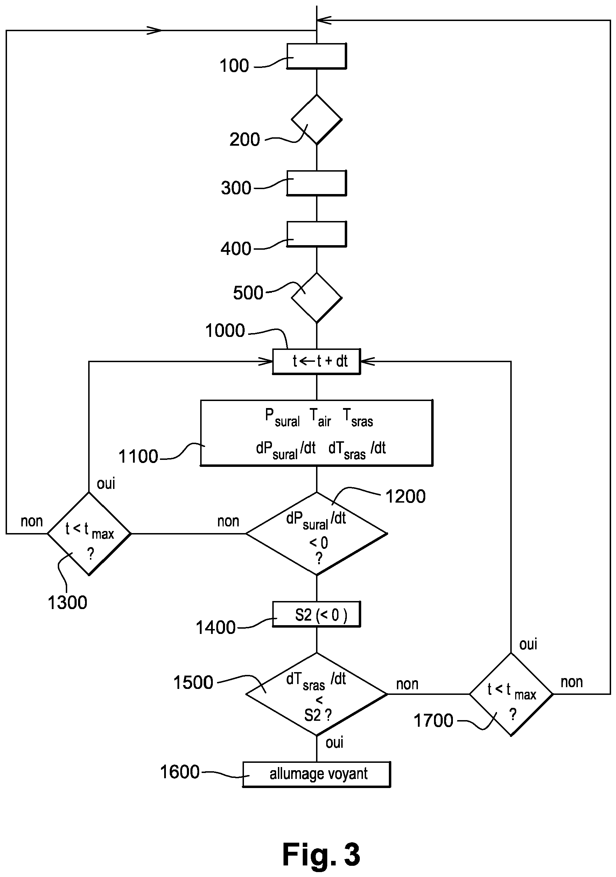

La figure 3 illustre un autre mode de réalisation d'un procédé de détection de défaillance selon l'invention. Un tel mode se distingue du précédent en ce que les conditions de détection d'une défaillance d'un refroidisseur sont plus restrictives.

Il ne suffit pas de mettre en évidence que les augmentations de température d'air suralimenté refroidi Tsras sont plus rapides qu'un seuil positif S1. Il faut aussi que les diminutions de température d'air suralimenté refroidi Tsras qui font immédiatement suite à une telle augmentation de température, par exemple lors de la baisse de pression de suralimentation à la fin d'une demande de couple élevé de la part du conducteur, soient elles aussi plus rapides que celles d'un refroidisseur jugé normal.

En effet, le comportement de la température d'air suralimenté refroidi Tsras en présence d'un refroidisseur défaillant tend à la formation de pics de température, qui sont formés d'une forte pente montante, suivie d'une forte pente descendante lors de la baisse de la pression de suralimentation. Par conséquent, si dans une période donnée après le pic de température, une valeur négative de taux de variation temporelle de température d'air suralimenté refroidi dTsras / dt est inférieure à un second seuil négatif S2 (c'est-à-dire : supérieure en valeur absolue à la valeur absolue du second seuil négatif S2), alors le refroidisseur est déclaré défaillant.

Sur la figure 3, on a représenté sommairement les premières étapes 100 à 500 de ce mode de réalisation, qui sont les mêmes que celles du mode illustré par la figure 2.

Le procédé se poursuit alors par une étape 1000 dans laquelle on incrémente un compteur de temps t du pas de temps dt, à partir d'un instant 0 qui correspond au moment où l'on a observé un taux de variation temporelle dTsras / dt de température supérieure au premier seuil positif S1.

Le procédé continue par une étape 1100 dont le contenu est identique à celui de l'étape 300, puis par une étape de test 1200 dans laquelle on vérifie si le taux de variation temporelle de pression de suralimentation dPsural / dt est négatif.

Si tel n'est pas le cas, le procédé reprend à l'étape 1000 jusqu'à ce qu'il fournisse une variation négative, tant que le compteur de temps t n'a pas atteint une durée maximale tmax. En d'autres termes, l'étape de test 1200 oriente vers une autre étape de test 1300 dans laquelle on vérifie si le temps t écoulé depuis l'étape 500 est inférieur à une durée maximale tmax. Si tel est le cas, le procédé reprend à l'étape 1000 ; si en revanche la durée maximale tmax est atteinte, le procédé reprend à l'étape 100.

En présence d'un taux de variation négatif de pression de suralimentation avant la durée maximale tmax, le procédé se poursuit par une étape 1400 dans laquelle on détermine un second seuil S2 négatif de taux de variation temporelle de température d'air suralimenté refroidi Tsras. De la même manière que pour le premier seuil S1, un tel seuil S2 dépend, pour un refroidisseur 9 qui est un échangeur du type air/air, d'un ensemble de paramètres comprenant au moins la pression de suralimentation Psural, le taux de variation temporelle (négatif) de la pression de suralimentation dPsural / dt, la température d'air ambiant Tair et la vitesse du véhicule déterminée à l'étape 100. Les différentes valeurs de seuil peuvent être calibrées à l'avance sur véhicule puis stockées dans une mémoire du calculateur 23.

On notera que dans le cas d'un refroidisseur 9 qui est un échangeur du type air/eau, le second seuil S2 est déterminé d'un ensemble de paramètres comprenant au moins trois paramètres seulement : la pression de suralimentation Psural, le taux de variation temporelle (négatif) de la pression de suralimentation dPsural / dt et la vitesse du véhicule déterminée à l'étape 100

Le procédé se poursuit par une étape 1500 de comparaison de taux de variation temporelle négatif de température d'air suralimenté refroidi dTsras / dt avec le second seuil négatif S2. Si ledit taux est inférieur au second seuil négatif S2, le procédé oriente vers une étape 1600 de détection d'une défaillance du refroidisseur 9, dans laquelle le voyant 25 est allumé pour signaler le diagnostic de mauvais fonctionnement du refroidisseur (9).

Dans le cas contraire, il reprend à l'étape 1000 jusqu'à ce qu'il fournisse un taux de variation négatif inférieur au second seuil négatif S2, tant que le compteur de temps t n'a pas atteint une durée maximale tmax. En d'autres termes, l'étape de comparaison 1500 oriente vers une autre étape de test 1700 dans laquelle on vérifie si le temps t écoulé depuis l'étape 500 est inférieur à une durée maximale tmax. Si tel est le cas, le procédé reprend bien à l'étape 1000 ; si en revanche la durée maximale tmax est atteinte, le procédé reprend à l'étape 100.

Le procédé selon l'invention présente de nombreux avantages. Il peut être utilisé à bord d'un véhicule et non pas seulement au laboratoire ou dans un atelier de maintenance, les étapes de calcul, de comparaison et de diagnostic étant réalisées au moyen d'un calculateur 23 embarqué à bord du véhicule. Il permet ainsi un traitement et un diagnostic extrêmement fiables et quasi instantanés, de sorte qu'une défaillance même momentanée du refroidisseur, susceptible de casser le moteur, peut être mise en évidence.

Le procédé selon l'invention est plus fiable et plus répétable que les procédés connus, car son principe repose sur l'étude de l'observation de la capacité d'un refroidisseur 9 d'air à amortir les variations de température, qui est un critère de premier ordre pour le bon fonctionnement d'un refroidisseur. Il permet en outre d'effectuer une détection de défaillance dans de larges conditions de fonctionnement du moteur, et en particulier dans les conditions de fonctionnement transitoire qui sont très fréquentes en usage normal, notamment urbain.

L'invention se rapporte également à un dispositif de motorisation apte à la mise en oeuvre d'un tel procédé. La principale caractéristique technique d'un tel dispositif, comprenant un moteur à combustion interne 1, est qu'il comporte au moins un capteur d'air suralimenté refroidi Tsras et un capteur de pression de suralimentation Psural ; au moins une cartographie d'une valeur d'un premier seuil S1 de taux de variation de température d'air suralimenté refroidi Tsras ; un voyant 25 pour signaler le mauvais fonctionnement du refroidisseur 9 ; et, un calculateur 23 permettant, en continu et de façon itérative, de calculer un paramètre représentatif de l'efficacité du refroidisseur qui est égal au taux de variation temporelle dTsras / dt de la température d'air suralimenté refroidi ; de comparer ce paramètre au premier seuil S1 ; et, d'allumer le voyant 25 dans le cas d'une détection de défaillance du refroidisseur 9. Dans le cas où le refroidisseur 9 est un échangeur de type air/air, le dispositif comprend en outre au moins un capteur de mesure de la température d'air ambiant Tair.

Naturellement, l'invention n'est pas limitée aux modes de réalisation qui viennent d'être décrits. Par exemple, le moteur à combustion interne 1 du dispositif de motorisation selon l'invention peut être un moteur diesel. Il peut être associé à un turbocompresseur à géométrie fixe plutôt qu'à géométrie variable, à une ou plusieurs boucles EGR, etc., sans sortir du cadre de l'invention.

## Revendications

1. Procédé de détection de la défaillance d'un refroidisseur (9) d'air suralimenté implanté dans un circuit d'admission d'air (3) d'un moteur (1) à combustion interne de véhicule automobile, ledit circuit (3) comprenant un compresseur (7) en amont du refroidisseur (9), ledit procédé étant réalisé en continu, par itérations successives, et comprenant :
- Une étape de détermination de la température d'air suralimenté refroidi (Tsras) entre le refroidisseur (9) et le moteur (1) ;
- Une étape de calcul du taux de variation temporelle (dTsras / dt) de ladite température d'air suralimenté refroidi (Tsras) ;
- Une étape de comparaison dudit taux (dTsras / dt) avec au moins un premier seuil (S1) positif ;
**CARACTERISE EN CE QU'**
Il comprend en outre, après une étape de comparaison du taux de variation temporelle (dTsras / dt) de la température d'air suralimenté refroidi (Tsras) avec le premier seuil (S1) positif au cours de laquelle on a constaté que ledit taux (dTsras / dt) est supérieur audit premier seuil positif :
- Une étape de calcul du taux de variation temporelle (dTsras / dt) de la température d'air suralimenté refroidi (Tsras) ;
- Une étape de comparaison dudit taux (dTsras / dt) avec un second seuil (S2) négatif ; et,
- Une étape d'établissement de bon ou mauvais diagnostic de fonctionnement effectué à partir de ladite comparaison.

2. Procédé selon la revendication 1, **caractérisé en ce qu'**il comprend en outre :
- Une étape de détermination de la pression de suralimentation (Psural) en aval du compresseur (7) et de la vitesse (V) du véhicule ;
- Une étape de calcul du taux de variation temporelle (dPsural / dt) de ladite pression de suralimentation (Psural) ; et,
- Une étape de détermination du premier seuil (S1) positif en fonction de la vitesse (V), de la pression de suralimentation (Psural) et du taux de variation temporelle (dPsural / dt) de cette dernière.

3. Procédé selon l'une des revendications 1 ou 2, **caractérisé en ce qu'**il comprend en outre :
- Une étape de détermination de la pression de suralimentation (Psural) en aval du compresseur (7) et de la vitesse (V) du véhicule ;
- Une étape de calcul du taux de variation temporelle (dPsural / dt) de ladite pression de suralimentation (Psural) ; et,
- Une étape de détermination du second seuil (S2) négatif en fonction de la vitesse (V), de la pression de suralimentation (Psural) et du taux de variation temporelle (dPsural / dt) de cette dernière.

4. Procédé selon l'une des revendications 1 à 3, **caractérisé en ce que** le diagnostic de mauvais fonctionnement du refroidisseur (9) est établi lorsque, après avoir constaté un taux de variation temporelle (dTsras / dt) de la température d'air suralimenté refroidi (Tsras) supérieur au premier seuil (S1) positif, on constate ensuite, dans un délai inférieur à une durée maximale (tmax), que ledit taux (dTsras / dt) est inférieur au second seuil négatif (S2).

5. Procédé selon l'une des revendications 2 à 4, **caractérisé en ce que** la pression de suralimentation (Psural) est mesurée entre le compresseur (7) et le refroidisseur (9).

6. Procédé selon l'une des revendications 2 à 4, **caractérisé en ce que** la pression de suralimentation (Psural) est mesurée entre le refroidisseur (9) et un boîtier-papillon (11) du circuit d'admission d'air (3).

7. Procédé selon l'une quelconque des revendications précédentes, **caractérisé en ce que** les étapes de calcul, de comparaison et d'établissement de diagnostic sont réalisées au moyen d'un calculateur (23) embarqué à bord du véhicule.

8. Procédé selon l'une quelconque des revendications précédentes, **caractérisé en ce qu'**il comprend une étape de mise en évidence d'un diagnostic de défaillance à travers l'allumage d'un voyant (25).

## Patentansprüche

1. Verfahren zur Fehlerdiagnose eines Ladeluftkühlers (9), der in einen Lufteinlasskreis (3) eines Verbrennungsmotors (1) eines Kraftfahrzeugs integriert ist, wobei der Kreis (3) einen Verdichter (7) stromaufwärts zum Kühler (9) umfasst, wobei das Verfahren kontinuierlich mit aufeinanderfolgenden Iterationen durchgeführt wird und umfasst:
- einen Schritt der Bestimmung der Temperatur der gekühlten Ladeluft (Tsras) zwischen dem Kühler (9) und dem Motor (1);
- einen Schritt der Berechnung der Rate der zeitlichen Variation (dTsras/dt) der Temperatur der gekühlten Ladeluft (Tsras);
- einen Schritt des Vergleichs der Rate (dTsras/dt) mit mindestens einer positiven Grenze (S1);
**dadurch gekennzeichnet, dass**
es ferner nach einem Schritt des Vergleichs der Rate der zeitlichen Variation (dTsras/dt) der Temperatur der gekühlten Ladeluft (Tsras) mit einer ersten positiven Grenze (S1), während dessen festgestellt wurde, dass die Rate (dTsras/dt) größer als die erste positive Grenze ist, umfasst:
- einen Schritt der Berechnung der Rate der zeitlichen Variation (dTsras/dt) der Temperatur der gekühlten Ladeluft (Tsras);
- einen Schritt des Vergleichs der Rate (dTsras/dt) mit einer zweiten negativen Grenze (S2) ; und
- einen Schritt der Erstellung einer guten oder schlechten Funktionsdiagnose, die auf Basis des Vergleichs erfolgt.

2. Verfahren nach Anspruch 1, **dadurch gekennzeichnet, dass** es ferner umfasst:
- einen Schritt der Bestimmung des Ladedrucks (Psural) stromabwärts zum Verdichter (7) und der Geschwindigkeit (V) des Fahrzeugs;
- einen Schritt der Berechnung der zeitlichen Variation (dPsural/dt) des Ladedrucks (Psural); und
- einen Schritt der Bestimmung der ersten positiven Grenze (S1) in Abhängigkeit von der Geschwindigkeit (V), dem Ladedrucks (Psural) und der Rate der zeitlichen Variation (dPsural/dt) dieses letztgenannten.

3. Verfahren nach einem der Ansprüche 1 oder 2, **dadurch gekennzeichnet, dass** es ferner umfasst:
- einen Schritt der Bestimmung des Ladedrucks (Psural) stromabwärts zum Verdichter (7) und der Geschwindigkeit (V) des Fahrzeugs;
- einen Schritt der Berechnung der Rate der zeitlichen Variation (dPsural/dt) des Ladedrucks (Psural); und
- einen Schritt der Bestimmung der zweiten negativen Grenze (S2) in Abhängigkeit von der Geschwindigkeit (V), dem Ladedruck (Psural) und der Rate der zeitlichen Variation (dPsural/dt) dieses letztgenannten.

4. Verfahren nach einem der Ansprüche 1 bis 3, **dadurch gekennzeichnet, dass** die Diagnose einer schlechten Funktion des Kühlers (9) gestellt wird, wenn, nachdem eine Rate der zeitlichen Variation (dTsras/dt) der Temperatur der gekühlten Ladeluft (Tsras) größer als die erste positive Grenze (S1) festgestellt wurde, sodann innerhalb einer Frist kürzer als eine maximale Dauer (tmax) festgestellt wird, dass die Rate (dTsras/dt) kleiner als die zweite negative Grenze (S2) ist.

5. Verfahren nach einem der Ansprüche 2 bis 4, **dadurch gekennzeichnet, dass** der Ladedruck (Psural) zwischen dem Verdichter (7) und dem Kühler (9) gemessen wird.

6. Verfahren nach einem der Ansprüche 2 bis 4, **dadurch gekennzeichnet, dass** der Ladedruck (Psural) zwischen dem Kühler (9) und einem Ventilgehäuse (11) des Lufteinlasskreises (3) gemessen wird.

7. Verfahren nach einem der vorhergehenden Ansprüche, **dadurch gekennzeichnet, dass** die Schritte der Berechnung, des Vergleichs und der Erstellung einer Diagnose mit Hilfe eines an Bord des Fahrzeugs eingebauten Rechners (23) erfolgen.

8. Verfahren nach einem der vorhergehenden Ansprüche, **dadurch gekennzeichnet, dass** es einen Schritt der Anzeige einer Fehlerdiagnose durch das Einschalten eines Kontrolllichts (25) umfasst.

## Claims

1. Method for detecting the failure of a charge air cooler (9) installed in an air intake circuit (3) of a motor vehicle internal combustion engine (1), said circuit (3) comprising a compressor (7) upstream of the cooler (9), said method being performed continuously, by successive iterations, and comprising:
- a step of determining the cooled charge air temperature (Tsras) between the cooler (9) and the engine (1);
- a step of computing the temporal variation rate (dTsras / dt) of said cooled charge air temperature (Tsras);
- a step of comparing said rate (dTsras / dt) with
at least one first positive threshold (S1), **characterized in that** it further comprises, after a step of comparing the temporal variation rate (dTsras / dt) of the cooled charge air temperature (Tsras) with the first positive threshold (S1), during which step it has been noted that said rate (dTsras / dt) is greater than said first positive threshold:
- a step of computing the temporal variation rate (dTsras / dt) of the cooled charge air temperature (Tsras);
- a step of comparing said rate (dTsras / dt) with a second negative threshold (S2); and
- a step of establishing a diagnosis of correct or faulty operation carried out on the basis of said comparison.

2. Method according to Claim 1, **characterized in that** it further comprises:
- a step of determining the charge pressure (Psural) downstream of the compressor (7) and of determining the speed (V) of the vehicle;
- a step of computing the temporal variation rate (dPsural / dt) of said charge pressure (Psural); and
- a step of determining the first positive threshold (S1) as a function of the speed (V), the charge pressure (Psural) and the temporal variation rate (dPsural / dt) of said charge pressure.

3. Method according to Claim 1 or Claim 2, **characterized in that** it further comprises:
- a step of determining the charge pressure (Psural) downstream of the compressor (7) and of determining the speed (V) of the vehicle;
- a step of computing the temporal variation rate (dPsural / dt) of said charge pressure (Psural); and
- a step of determining the second negative threshold (S2) as a function of the speed (V), the charge pressure (Psural) and the temporal variation rate (dPsural / dt) of said charge pressure.

4. Method according to one of Claims 1 to 3, **characterized in that** the diagnosis of faulty operation of the cooler (9) is established when, after having noted a temporal variation rate (dTsras / dt) of the cooled charge air temperature (Tsras) that is greater than the first positive threshold (S1), it is subsequently noted, within a delay below a maximum duration (tmax), that said rate (dTsras / dt) is below the second negative threshold (S2).

5. Method according to one of Claims 2 to 4, **characterized in that** the charge pressure (Psural) is measured between the compressor (7) and the cooler (9).

6. Method according to one of Claims 2 to 4, **characterized in that** the charge pressure (Psural) is measured between the cooler (9) and a throttle valve housing (11) of the air intake circuit (3).

7. Method according to any one of the preceding claims, **characterized in that** the steps of computing, of comparing and of establishing a diagnosis are performed by means of a computer (23) on board the vehicle.

8. Method according to any one of the preceding claims, **characterized in that** it comprises a step of highlighting a failure diagnosis by illuminating an indicator (25).
